# EUROPÄISCHE PATENTSCHRIFT

(11) **EP 0 522 347 B1**
(45) Veröffentlichungstag und Bekanntmachung des Hinweises auf die Patenterteilung: **07.02.1996**
(21) Anmeldenummer: 92110575.5
(22) Anmeldetag: 23.06.1992
(51) Int. Cl.: C04B 28/08, E02D 19/18, E02D 31/00, C04B 40/00

(54) **Mittel zur Herstellung einer Dichtwandmasse**
Product for making impervious barrier mass
Produit pour la fabrication d'une masse de paroi étanche

(30) Priorität: 01.07.1991 DE 4121776
(43) Veröffentlichungstag der Anmeldung: 13.01.1993
(60) Teilanmeldung: 95101936.3
(73) Patentinhaber: DYCKERHOFF AKTIENGESELLSCHAFT, D-65203 Wiesbaden (DE)
(72) Erfinder: Hermann, Adalbert, Dr., W-4540 Lengerich/Westfalen (DE)
(74) Vertreter: Patentanwälte Dr. Solf & Zapf

(56) Entgegenhaltungen:
- EP-A- 0 262 302
- EP-A- 0 361 614
- DE-A- 3 411 009
- DE-C- 613 037
- PATENT ABSTRACTS OF JAPAN vol. 6, no. 220 (M-169)5. November 1982
- PATENT ABSTRACTS OF JAPAN vol. 013, no. 244 (M-834)7. Juni 1989
- PATENT ABSTRACTS OF JAPAN vol. 6, no. 167 (M-153)31. August 1982
- CHEMICAL ABSTRACTS, vol. 111, no. 18, 30. Oktober 1989, Columbus, Ohio, US; abstract no. 159339z, K. KOIBUCHI ET AL Seite 357;
- PATENT ABSTRACTS OF JAPAN vol. 5, no. 56 (M-066)30. April 1981
- CHEMICAL ABSTRACTS, vol. 99, no. 6, 8. August 1983, Columbus, Ohio, US; abstract no. 42643m, OHBAYASHI-GUMI Seite 257 ;

## Beschreibung

Die Erfindung betrifft ein Mittel zur Herstellung einer Dichtwandmasse, z.B. für die Erstellung von Dichtungsschlitzwänden nach dem Einphasenverfahren.

Bei der Herstellung von Dichtungsschlitzwänden werden Dichtwandmassen in Bodenschlitze eingebaut, z.B. als Vertikalelemente von Umschließungsvorhaben zur Verhinderung der Ausbreitung eventueller Bodenverunreinigungen über das Grundwasser oder in Baugruben oder Tagebaubetrieben als Wände zur Verringerung größerer Grundwasserabsenkungen und zu fördernder Grundwassermengen. Bei Versuchen mit Hilfe bohrtechnischer Methoden, wie z.B. abgelenkter Bohrungen, nachträglich Deponien und andere Altlasten auch horizontal abzudichten, werden besondere Anforderungen an Eigenschaften von Einphasen-Dichtwandmassen gestellt, wie z.B. sich über möglichst lange Zeiträume wenig verändernde rheologische Eigenschaften, hohe Fließgrenze, wenig Sedimentation, geringe Filtratwasserabgabe und spätes Erstarren, dessen Beginn erst zu einem möglichst spät zu bestimmenden Zeitpunkt einsetzen sollte, und besonders niedriger Wasserdurchlässigkeitsbeiwert bei niedrigen Druckfestigkeiten.

Während beim Zweiphasenverfahren zunächst mit einer reinen Bentonitsuspension als Stützflüssigkeit im ausgehobenen Erdschlitz gearbeitet wird und erst in einem zweiten Schritt das eigentliche Dichtungsmaterial, z.B. Beton oder bentonithaltiger Beton, im Kontraktorverfahren durch Verdrängung der Stützflüssigkeit eingebracht wird, ermöglicht das Einphasenverfahren durch Verwendung einer selbsterhärtenden Bentonit-Zement-Suspension die Lösung der Aufgabe bei vertikalen Schlitzwänden in besonders wirtschaftlicher Weise, wobei sichergestellt ist, daß Bentonite und die später Calziumsilikathydrat-Phasen bildende Hochofenschlacke optimal gleichmäßig verteilt sind.

Bei weitestgehend horizontalen Abdichtungen scheidet das Zweiphasenverfahren wegen der problematischen vollständigen Verdrängung der Bentonit-Stützsuspension durch eine später einzubringende Dichtsuspension aus.

Für das Einphasenverfahren sind aus der DE-PS 36 33 736 vorgefertigte Trockenmischungen auf der Basis von relativ teuren zementstabilen Bentoniten - gemahlener Hochofenschlacke (HOS) - wenig Portlandzement (oder anderen Hydroxylionen bildenden Anregern) - gegebenenfalls Zusätzen zur Verarbeitbarkeitsveränderung - gegebenenfalls Inerstoffzusätzen zur Erhöhung der Rohdichte bekannt. Diese vorgefertigten Trockenmischungen, die bevorzugt Portlandzement, CaO oder Ca(OH)₂ als Hydroxylionen bildende Anreger für die Hochofenschlacke aufweisen, werden in einem scherenden, intensiven Mischverfahren mit einer erforderlichen Wassermenge angemacht und in an sich bekannter Weise in einen Dichtwandschlitz eingebracht.

Es ist festgestellt worden, daß sich z.B. im Falle der Verwendung von Na-Bentoniten oder preiswerten, aktivierten Ca-Bentoniten und auch bei Verwendung relativ teurer zementstabiler Na-Bentonite und aktivierter Ca-Bentonite und Anregung durch Zement - vom Herstellungszeitpunkt der Trockenmischung an bis zum Gebrauchsbeginn (Anmachen der Suspension mit Wasser) die eingestellten Eigenschaften wie insbesondere die Viskosität, die Filtratwasserabgabe, das Erstarrungsverhalten, die Festigkeit und die Wasserdurchlässigkeit nicht ergeben. Der angemachte Schlamm ist meist zu dünnflüssig; die Filtratwasserabgaben und die Absetzungen sind erhöht; die Erhärtungsgeschwindigkeiten bis zum 28-Tage-Termin sind verringert und die Wasserdurchlässigkeits-Beiwerte können erhöht sein.

Zudem ist die Entwicklung der Festeigenschaften (Eigenschaften im verfestigten Zustand), wie die Erhärtungsgeschwindigkeit der bekannten Suspensionen, nur schwierig unterschiedlichen Anforderungen der Einbaustellen (Temperatur, erforderliche offene Zeit) anzupassen.

Aufgabe der Erfindung ist, ein Mittel zur Herstellung einer Dichtwandmasse zur Verfügung zu stellen, dessen eingestellte Eigenschaften unabhängig vom Gebrauchsbeginn gewährleistet werden können, das unter anderem nicht zementstabilen Na-Bentonit bzw. nicht aktivierten Ca-Bentonit enthalten kann und somit unabhängig vom Bentonit-Typ ist und das ermöglicht, die Entwicklung der Festeigenschaften der Dichtwandmasse auf einfache Weise zu steuern.

Diese Aufgabe wird durch die Merkmale des Anspruchs 1 gelöst. Vorteilhafte Weiterbildungen der Erfindung werden in den von diesem Anspruch abhängigen Unteransprüchen gekennzeichnet.

Im Rahmen der vorliegenden Erfindung wurde herausgefunden, daß sich die eingestellten Eigenschaften der bekannten vorgefertigten Trockenmischungen mit zunehmender Zeit und Lagertemperatur sowie Reaktionsfähigkeit der Hochofenschlacke verschlechtern und es wurde ein unkomplizierter Weg aufgefunden, die aufgrund von Mischungsverhältnissen eingestellten Eigenschaften zeitlich unbegrenzt zu gewährleisten und somit eine Verschlechterung der Eigenschaften zu vermeiden (diese Verschlechterung der Eigenschaften wird im folgenden mit "Verlagerung" bzw. "verlagern" bezeichnet). Erfindungsgemäß wird einer Verlagerung entgegengewirkt, indem Trockenmischungen auf der Basis
- Bentonit
- gemahlener Hochofenschlacke
- gegebenenfalls Zusätzen zur Verarbeitbarkeitsveränderung
- gegebenenfalls Inertstoffzusätzen zur Erhöhung der Rohdichte ohne Anreger hergestellt werden und Anreger frühestens beim Anmachen einer Suspension aus den genannten Stoffen oder zu einem beliebigen Zeitpunkt nach dem Anmachen einer Suspension aus den genannten Stoffen und nach dem Quellen des Bentonits zugesetzt werden. Dabei wird der Anreger vorzugsweise in Form einer wässrigen Lösung zugesetzt, z.B. in Form einer alkalihydroxidhaltigen Lösung, insbesondere einer NaOH-Lösung oder z.B. in Form einer Lösung, die ein Alkalihydroxid, z.B. NaOH, und mindestens eine andere Alkali-Verbindung enthält, die insbesondere ein Alkalisulfat, Alkalichlorid und/oder Alkalicarbonat sein kann. Die zuzusetzende Lösung enthält somit nach einer bevorzugten Ausführungsform der Erfindung einen Anreger in flüssiger Form. Eine besonders geeignete Lösung enthält NaOH und Na₂SO₄. Die Wirkung dieser Lösung ist relativ temperaturunabhängig, d.h. sie wirkt in einem weiten Temperaturbereich in der Dichtwandmasse, z.B. im Bereich von 10 bis 30°C, unkritisch. Die Wirkung anderer Lösungen kann temperaturabhängiger sein, und zwar z.B. in Abhängigkeit vom Mischungsverhältnis zwischen NaOH und den anderen Alkaliverbindungen. Dabei kann diese Abhängigkeit auf einfache Weise empirisch ermittelt und den Suspensionstemperaturen angepaßt werden.

Im Falle der Verwendung von Alkali-Anregern kann erfindungsgemäß nahezu jeder Bentonit-Typ eingesetzt werden.

Die Entwicklung der Festeigenschaften der Dichtwandmasse kann auf einfache Weise dadurch gesteuert werden, daß der Anreger erst zu einem bestimmten Zeitpunkt zugesetzt wird und/oder daß die Anreger-Menge dabei auf die Entwicklung der Festeigenschaften der Dichtwandmasse abgestellt wird.

Es ist bekannt, Hochofenschlacke unter anderem auch mit einer Lösung aus NaOH, Na₂CO₃ oder Wasserglas zu aktivieren. Daß das Getrennthalten der erfindungsgemäß ausgewählten Alkali-Anreger von den anderen trocken vorgemischten Reaktionspartnern vor deren Verwendung und die Verwendung der Anreger insbesondere in Form von Lösungen und das Zugeben vorzugsweise zu einer bereits angemachten Suspension aus Bentonit und Hochofenschlacke sowie gegebenenfalls den Zusätzen besonders günstige Eigenschaften einer Dichtwandmasse gewährleisten, die nicht nur von der Reaktion der Anreger mit der Hochofenschlacke, sondern wohl auch von physikalisch-chemischen Eigenschaften insbesondere der vorgemischten Suspension zum Zeitpunkt der Zugabe abhängig sind, war aus dem Stand der Technik nicht zu erkennen und wohl auch nicht zu erwarten.

Bei Schlammtemperaturen bis 20°C erhält man auch nach einer Wartezeit von mehreren Tagen bis zur Zugabe einer Anregerlösung aus einer bis dahin gut aufrührbaren Suspension mit hoher Fließgrenze den gleichen Erstarrungs- bzw. Erhärtungsfortschritt nach der Zugabe, den man bei Zugabe der gleichen Lösung unmittelbar nach der Schlamm- bzw. Suspensionsherstellung erhält. Bei Temperaturen oberhalb etwa 20°C kann die Hydraulizität bestimmter Hochofenschlackenmehle allein in der Suspension bereits nach wenigen Tagen ohne chemische Anregung zum unkontrollierbaren Erstarrungsbeginn führen. Um dies zu unterdrücken und um die gleichen Eigenschaften zu erhalten wie bei Temperaturen unterhalb etwa 20°C, wird nach einer besonderen Ausführungsform der Erfindung ein Bentonit verwendet, dem Ca²⁺-Chelatbildner oder Ca²⁺-Fällmittel direkt bei der Bentonitherstellung bzw. -veredelung zugegeben wurden. Auf diese Weise kann der Erstarrungsbeginn der Suspension wirksam bis zum Zusetzen des Anregers unterdrückt werden.

Es ist bekannt, daß die zeitliche Entwicklung der Festeigenschaften, insbesondere die Wasserdurchlässigkeit, einer Dichtwandmasse temperaturabhängig ist. Nach dem erfindungsgemäßen Verfahren wird diese Abhängigkeit in überraschender Weise günstig beeinflußt.

Nach der Erfindung werden somit lose oder abgepackte Trockenmischungen hergestellt, bestehend aus bestimmten, auf die gewünschten Eigenschaften der Dichtwandmasse abgestellten Gehalten an Bentonit und Hochofenschlacke sowie gegebenenfalls an sich bekannten Zusätzen zur Verbesserung der Verarbeitbarkeit und gegebenenfalls an sich bekannten Inertzusätzen zur Erhöhung der Rohdichte und gegebenenfalls an sich bekannten Zusätzen zur Erhöhung der Dichtigkeit, wie z.B. reaktive Kieselsäure gemäß z.B. DE-OS 38 00 776. Diese Trockenmischungen können unbegrenzt trocken gelagert werden, ohne daß sie sich verändern bzw. ohne daß eine daraus hergestellte Dichtwandmasse andere als die vorbestimmten gewünschten Eigenschaften aufweist. Zum bestimmungsgemäßen Verbrauch wird im Falle der Verwendung von Alkali-Anregern eine Suspension aus der Trockenmischung und dem Anreger hergestellt. Vorzugsweise wird durch Vormischung zunächst aus der Trockenmischung unter Zusatz einer bestimmten Wassermenge in üblicher Weise z.B. durch scherendes Mischen eine Suspension hergestellt. Der Suspension kann unmittelbar nach dem Vormischen oder nach dem Quellen des Bentonits ein Alkali-Anreger in bestimmter Menge zugesetzt werden, so daß die Wirkung des Anregers sofort einsetzen kann und in einer bestimmten Zeit sich die gewünschten Eigenschaften der Dichtwandmasse entwickeln. Die gleiche Alkali-Anregermenge kann aber auch zu einem beliebigen späteren Zeitpunkt der gleichen Suspension zugemischt werden, so daß erst zum Zeitpunkt des späteren Zusetzens die Wirkung des Anregers beginnt und sich die gewünschten Eigenschaften der Dichtwandmasse in der gleichen Zeitspanne, gerechnet vom Zeitpunkt des Zusetzens, entwickeln.

Die Alkali-Anreger werden zum Verwendungszeitpunkt z.B. in Pulverform der Trockenmischung, vorzugsweise jedoch der Suspension oder dem Anmachwasser zugemischt.

Sehr viel günstiger ist jedoch das Zumischen in Form einer wässerigen Lösung aus mindestens einem Anreger dem Anmachwasser oder der Suspension, wobei besonders geeignet eine NaOH-Lösung ist. Gut geeignet sind auch Lösungen aus einem Alkalisalz, z.B. aus Na₂SO₄ und Lösungen aus zwei oder mehreren Alkalisalzen. Mit einer Lösung aus NaOH und einem Alkalisalz, insbesondere Na₂SO₄, können der Anregungsbeginn und -verlauf sowie die Entwicklung der gewünschten Eigenschaften der Dichtwandmasse besonders gut kontrollierbar eingestellt werden.

Im Rahmen der Erfindung kann die Anregung der Hochofenschlacke auch mit Zementklinkerbestandteilen, Erdalkalihydroxiden, insbesondere Ca(OH)₂ erfolgen. Es wurde festgestellt, daß sich selbst bei Verwendung von zementstabilen Bentoniten beim Anmachen der Suspension bis zum Erstarrungsbeginn der Filtratwasserabgabe fortlaufend deutlich erhöht. Dem kann erfindungsgemäß entgegengewirkt werden, indem zunächst eine Suspension ohne Anreger hergestellt und der Anreger erst nach dem Quellen des Bentonits zugesetzt wird. Eine andere Möglichkeit, dem entgegenzuwirken, besteht in der erfindungsgemäßen Verwendung von Alkali-Anregern.

Die Zusatzmenge an Anregern ist insbesondere abhängig von der Art, Feinheit und Menge der Hochofenschlacke sowie der Art und Menge des Bentonits sowie gegebenenfalls von der Art und Menge der sonstigen Zusatzstoffe und wird im wesentlichen empirisch ermittelt.

Die Erfindung schaltet die geschilderten Nachteile aus, die Anreger verursachen können, wenn sie in einer trockenen Vormischung vorhanden sind (Verlagerung). Die Erfindung ist jedoch auch anwendbar, wenn die Mischungspartner einzeln erst an der Einbaustelle der Dichtwandmasse zusammengesetzt und mit Wasser zu einer Suspension angemacht werden; dabei führt die Verwendung der Alkali-Anreger zur Vermeidung von erhöhten Filtratwasserabgaben und ermöglicht die Verwendung nahezu aller bekannter Bentonit-Typen. Bei Verwendung von Erdalkali-Ionen enthaltenden Anregern wird zweckmäßigerweise ein zementstabiler Bentonit oder ein Bentonit verwendet, der einen Ca²⁺-Chelatbildner oder ein Ca²⁺-Fällmittel aufweist. Der Anreger wird in diesem Fall erst nach dem Quellen des Bentonits zugesetzt.

In vielen Fällen, insbesondere bei üblicher Anwendungsrestfeuchte der aktivierten Ca-Bentonite, ist es vorteilhaft, die mögliche maximale Quellung des Bentonits dadurch zu erhalten, daß man zur Abfangung von Ca²⁺ und anderen mehrwertigen Kationen, die aus der gemahlenen Hochofenschlacke zum Bentonit übertreten können, zusätzlich und vorzugsweise bereits bei der Aufbereitung des Bentonits Chelatbildner für Ca²⁺-Ionen und ggf. andere mehrwertige Kationen und/oder Ca²⁺-Fällmittel zumischt.

Die Fällung von Ca²⁺ durch Alkalisalze, deren Anionen mit Ca unlösliche Verbindungen ergeben, ist an sich durch Patent 613037 bekannt.

Die folgenden Tabellen 1 und 2 enthalten Versuchsergebnisse, aus denen sich ergibt, daß die Zugabe der Anreger erst nach Zubereitung der Suspension aus den anderen Bestandteilen der Dichtwandmasse die überraschende Wirkung der Gewährleistung der gewünschten Eigenschaften der Dichtwandmasse bringt.

Die Ermittlung der Tabellenwerte erfolgte wie folgt:
Suspension-Anmachvorschrift gemäß DIN 4127 (August 1986) - Angaben in Abs. 6.1.1. Verwendet wurde ein 2 Liter-Chargen-Rührgerät mit 3.000 U/min⁻¹ Turbomischer. Die Rührzeit betrug 10 Minuten. Geometrie des Rührers und des Gefäßes entsprachen der DIN.
Marshzeit = Auslaufzeit aus dem Marshtrichter nach API RP 13 B (1982), Abs. 2.2 bis 2.4
für den Auslauf von 1,00 dm³
Filtratwasserabgabe im Filterpreßversuch nach DIN 4127 (August 1986) Abs. 6.4
Absetzen im 250 ml-Zylinder (definiert in API 10 (1990)) Abs. 6.1
"Erstarren"-Beginn und -Ende nach einer Hausmethode: Eindringen einer 9,7 g Stahlkugel bzw. Penetration mit einem Draht.
Druckfestigkeiten = einaxiale Druckfestigkeiten nach DIN 18136 nach fortlaufender Wasserlagerung bei den Versuchstemperaturen
Wasserdurchlässigkeitsbeiwert in Anlehnung an DIN 18139 (Nov. 1983) in der Abwandlung nach Meseck, Mitteilungen des Instituts für Grundbau und Bodenmechanik TU-Braunschweig, Heft Nr. 25 (1987) S. 109, nach jeweils dreitägiger Durchströmung und anschließender Weiterlagerung im Wasserbad.

Vergleicht man in Tabelle 1 die Hauptspalte 1.1 mit Spalte 1.02, so ergibt sich der Einfluß der Verlagerung wie folgt:

| | | |
|---|---|---|
| Zeile a2 | sofort dünnflüssiger | 31 statt 38 sec/1 |
| a3 | erhöhte Filtratwasserabgabe | 67 statt 40 ml |
| a4 | erhöhte Absetzneigung | 1,4 statt 0,7% |

verringerte Druckfestigkeit 7d: 0,6; 28d: 0,7 statt 1,0 und 1,1 N/mm²
vergrößerter k-Wert ca. 5 x E-10 statt 6 bzw. 2 x E-11
Daß die Filtratwasserabgabe üblicher vorgefertigter Dichtwandmassentrockenmischungen bis zum Erstarrensbeginn auch bei Nicht-Verlagerung fortlaufend deutlich verschlechtert wird, geht aus dem Vergleich der Zeilen a3 mit b3 in den Spalten 1.01; 1.02 und auch 1.1 hervor.

Aus Tabelle 2 geht hervor, daß man Anreger zu einem beliebigen Zeitpunkt in relativ weiten Zeitgrenzen zugeben kann, ohne daß die eingestellten Eigenschaften sich verändern. Damit wird die bisherige schwierige Anpassung an unterschiedliche Einbaustellen-Bedingungen bei Verwendung von Standardmischungen, denen Anreger im Herstellerwerk bereits zugegeben sind, vermieden (z.B. die Zugabe von Verzögern).

Eine verringerte Temperaturabhängigkeit der Festeigenschaften ergibt sich aus einem Vergleich der Werte in den Spalten 1.01 und 1.02 der Zeilen d3 und d6 mit den Werten der Spalten 3.01 und 3.02 bzw. der Spalten 2.01 und 2.02 in Tabelle 1.

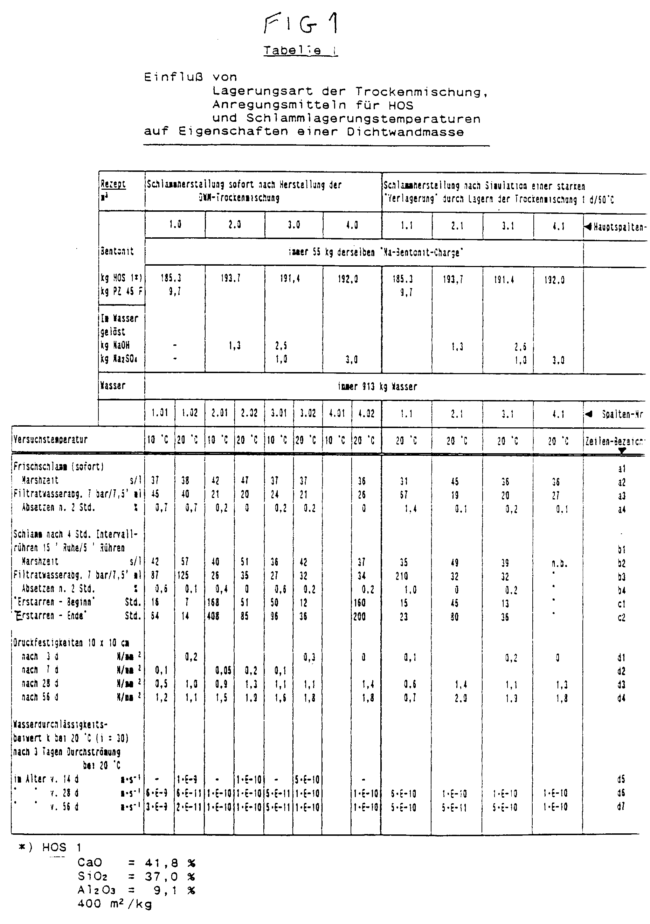

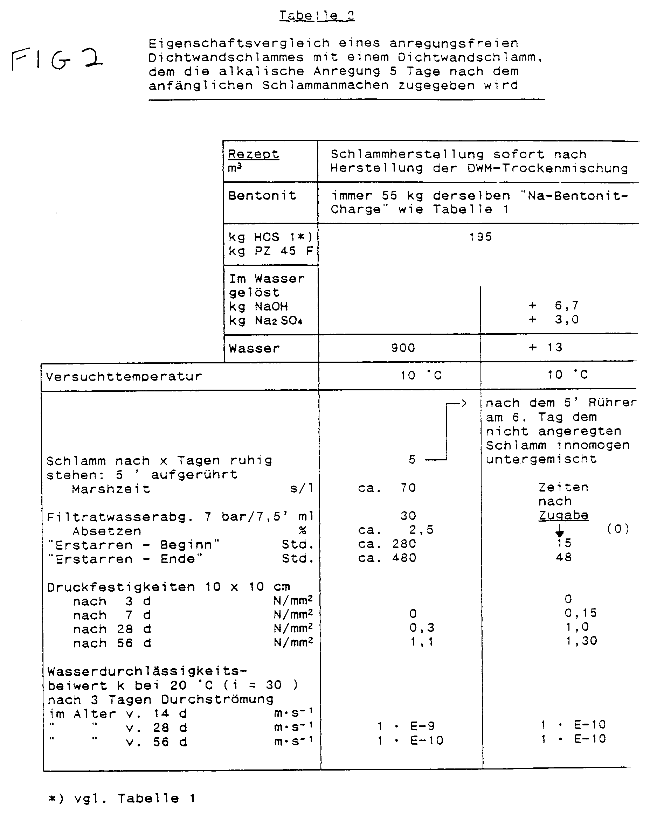

## Patentansprüche

1. Mittel zur Herstellung einer Dichtmassensuspension insbesondere zur Verwendung zur Erstellung von Dichtungsschlitzwänden nach dem Einphasenverfahren,
**gekennzeichnet** durch
eine lagerstabile Trockenmischung im wesentlichen bestehend aus Bentonit und gemahlener Hochofenschlacke und einem bis zum Anmachen der Suspension getrennt davon vorgehaltenen Anreger für die Hochofenschlacke in auf den jeweiligen Anwendungsfall abgestimmter Menge.

2. Mittel nach Anspruch 1,
dadurch **gekennzeichnet**,
daß die Trockenmischung einen nicht aktivierten Bentonit enthält.

3. Mittel nach Anspruch 1,
dadurch **gekennzeichnet**,
daß die Trockenmischung einen aktivierten Ca-Bentonit enthält.

4. Mittel nach Anspruch 3,
dadurch **gekennzeichnet**,
daß dem Ca-Bentonit vorzugsweise bereits bei der Aufbereitung Chelatbildner für Ca²⁺-Ionen und ggf. andere mehrwertige Kationen und/oder Ca²⁺-Fällmittel anstelle oder zusätzlich zu den an sich bekannten Aktivierungsmitteln zugemischt werden.

5. Mittel nach einem oder mehreren der Ansprüche 1 bis 4,
dadurch **gekennzeichnet**,
daß die Trockenmischung an sich bekannte Zusätze zur Verbesserung der Verarbeitbarkeit enthält.

6. Mittel nach einem oder mehreren der Ansprüche 1 bis 5,
dadurch **gekennzeichnet**,
daß die Trockenmischung an sich bekannte Inertstoff-Zusätze zur Erhöhung der Rohdichte enthält.

7. Mittel nach einem der Ansprüche 1 bis 6,
dadurch **gekennzeichnet**,
daß die Trockenmischung an sich bekannte Zusätze zur Erhöhung der Dichtigkeit enthält.

8. Mittel nach einem oder mehreren der Ansprüche 1 bis 7,
dadurch **gekennzeichnet**,
daß der Anreger in Pulverform vorliegt.

9. Mittel nach Anspruch 8,
dadurch **gekennzeichnet**,
daß der Anreger ein Zement ist.

10. Mittel nach Anspruch 8,
dadurch **gekennzeichnet**,
daß der Anreger mindestens ein Erdalkalihydroxyd ist.

11. Mittel nach Anspruch 10,
dadurch **gekennzeichnet**,
daß das Erdalkalihydroxyd zwei- oder mehrwertige Ionen aufweist.

12. Mittel nach Anspruch 11,
dadurch **gekennzeichnet**,
daß der Anreger Ca(OH)₂ ist.

13. Mittel nach Anspruch 8,
dadurch **gekennzeichnet**,
daß der Anreger eine Alkaliverbindung ist.

14. Mittel nach Anspruch 13,
dadurch **gekennzeichnet**,
daß die Alkaliverbindung ein Alkalisalz ist.

15. Mittel nach einem oder mehreren der Ansprüche 8 bis 14,
dadurch **gekennzeichnet**,
daß der Anreger mindestens zwei der Anregerstoffe enthält.

16. Mittel nach einem oder mehreren der Ansprüche 1 bis 6,
dadurch **gekennzeichnet**,
daß der Anreger eine ein Alkali enthaltende wässrige Lösung ist, vorzugsweise mit einem pH-Wert über 11.

17. Mittel nach Anspruch 16,
dadurch **gekennzeichnet**,
daß der Anreger eine ein Alkalihydroxid enthaltende Lösung insbesondere eine NaOH-Lösung ist.

18. Mittel nach Anspruch 16,
dadurch **gekennzeichnet**,
daß die Lösung eine Alkalisalzlösung ist.

19. Mittel nach Anspruch 18,
dadurch **gekennzeichnet**,
daß die Lösung eine Na₂SO₄-Lösung ist.

20. Mittel nach Anspruch 16,
dadurch **gekennzeichnet**,
daß die Lösung zwei oder mehrere Alkalisalze aufweist.

21. Mittel nach Anspruch 16,
dadurch **gekennzeichnet**,
daß die Lösung NaOH und mindestens ein Alkalisalz aufweist.

22. Mittel nach Anspruch 21,
dadurch **gekennzeichnet**,
daß die Lösung NaOH und Na₂SO₄ aufweist.

## Claims

1. Means of producing a sealing composition suspension, in particular for use in creating sealing slotted walls, by the single-phase process, characterized by a dry mixture which is stable on storage and substantially comprises bentonite and ground blast furnace slag, and an exciting means for the blast furnace slag, kept separate from the dry mixture until the suspension is made up, in an amount adapted to the respective application case.

2. Means according to Claim 1, characterized in that the dry mixture contains a non-activated bentonite.

3. Means according to Claim 1, characterized in that the dry mixture contains an activated Ca bentonite.

4. Means according to Claim 3, characterized in that there are added to the Ca bentonite, preferably at the time of preparation, chelate formers for Ca²⁺ ions and optionally other polyvalent cations and/or Ca²⁺ precipitation means instead of or in addition to the activation means which are known per se.

5. Means according to one or more of Claims 1 to 4, characterized in that the dry mixture contains additives which are known per se for improving the processability.

6. Means according to one or more of Claims 1 to 5, characterized in that the dry mixture contains inert additives which are known per se for increasing the bulk density.

7. Means according to one of Claims 1 to 6, characterized in that the dry mixture contains additives which are known per se for increasing the sealing tightness.

8. Means according to one or more of Claims 1 to 7, characterized in that the exciting means is in powder form.

9. Means according to Claim 8, characterized in that the exciting means is a cement.

10. Means according to Claim 8, characterized in that the exciting means is at least one earth alkali hydroxide.

11. Means according to Claim 10, characterized in that the earth alkali hydroxide has bivalent or polyvalent ions.

12. Means according to Claim 11, characterized in that the exciting means is Ca(OH)₂.

13. Means according to Claim 8, characterized in that the exciting means is an alkali compound.

14. Means according to Claim 13, characterized in that the alkali compound is an alkali metal salt.

15. Means according to one or more of Claims 8 to 14, characterized in that the exciting means contains at least two of the exciting means substances.

16. Means according to one or more of Claims 1 to 6, characterized in that the exciting means is an aqueous solution containing an alkali, preferably an aqueous solution having a pH value above 11.

17. Means according to Claim 16, characterized in that the exciting means is a solution containing an alkali hydroxide, in particular an NaOH solution.

18. Means according to Claim 16, characterized in that the solution is an alkali metal salt solution.

19. Means according to Claim 18, characterized in that the solution is an Na₂SO₄ solution.

20. Means according to Claim 16, characterized in that the solution has two or more alkali metal salts.

21. Means according to Claim 16, characterized in that the solution has NaOH and at least one alkali metal salt.

22. Means according to Claim 21, characterized in that the solution has NaOH and Na₂SO₄.

## Revendications

1. Produit pour la fabrication d'une suspension pour matériau d'étanchéité, destiné à être utilisé selon le procédé monophasique en particulier pour les rideaux souterrains étanches,
caractérisé par
un mélange sec, stable au stockage, composé essentiellement de bentonite et de laitier de haut fourneau pulvérisé et d'un activateur pour le laitier de haut fourneau, qui ne sera ajouté qu'au moment de la préparation de la suspension en quantité définie en fonction de chaque cas d'application.

2. Produit selon la revendication 1,
caractérisé en ce que le mélange sec contient de la bentonite non activée.

3. Produite selon la revendication 1,
caractérisé en ce que le mélange sec contient de la bentonite-Ca activée.

4. Produit selon la revendication 3,
caractérisé en ce que des chélateurs pour des ions Ca²⁺ et, le cas échéant, d'autres cations à plusieurs valences et/ou des précipitants Ca²⁺ sont ajoutés à la bentonite-Ca, de préférence lors de la préparation, en remplacement ou en complément des activateurs connus.

5. Produit selon l'une ou plusieurs revendications de 1 à 4,
caractérisé en ce que le mélange sec contient des additifs connus, destinés à améliorer la possibilité de traitement.

6. Produit selon l'une ou plusieurs revendications de 1 à 5,
caractérisé en ce que le mélange sec contient des additifs inertes, destinés à augmenter la masse volumique apparente.

7. Produit selon l'une des revendications 1 à 6,
caractérisé en ce que le mélange sec contient des additifs connus, destinés à améliorer l'étanchéité.

8. Produit selon l'une ou plusieurs revendications de 1 à 7,
caractérisé en ce que l'activateur se présente sous forme de poudre.

9. Produit selon la revendication 8,
caractérisé en ce que l'activateur est un ciment.

10. Produit selon la revendication 8,
caractérisé en ce que l'activateur est au moins un. hydroxyde alcalino-terreux.

11. Produit selon la revendication 10,
caractérisé en ce que l'hydroxyde de base alcalino-terreuse contient des ions à deux ou plusieurs valences.

12. Produit selon la revendication 11,
caractérisé en ce que l'activateur est du Ca(OH)₂.

13. Produit selon la revendication 8,
caractérisé en ce que l'activateur est une combinaison alcaline.

14. Produit selon la revendication 13,
caractérisé en ce que la combinaison alcaline est un sel alcalin.

15. Produit selon l'une ou plusieurs revendications de 8 à 14,
caractérisé en ce que l'activateur contient au moins deux produits d'activation.

16. Produit selon l'une ou plusieurs revendications de 1 à 6,
caractérisé en ce que l'activateur est une solution aqueuse qui contient un alcali, de préférence avec une valeur de pH supérieure à 11.

17. Produit selon la revendication 16,
caractérisé en que l'activateur est une solution contenant un hydroxyde alcalin, en particulier une solution NaOH.

18. Produit selon la revendication 16,
caractérisé en ce que la solution est une solution de sels alcalins.

19. Produit selon la revendication 18,
caractérisé en ce que la solution est une solution Na₂SO₄.

20. Produit selon la revendication 16,
caractérisé en ce que la solution contient deux ou plusieurs sels alcalins.

21. Produit selon la revendication 16,
caractérisé en ce que la solution contient du NaOH et au moins un sel alcalin.

22. Produit selon la revendication 21,
caractérisé en ce que la solution contient NaOH et Na₂SO₄.
